# EUROPEAN PATENT APPLICATION

(11) **EP 4 269 627 A1**
(43) Date of publication of application: **01.11.2023**
(21) Application number: 21910343.9
(22) Date of filing: 09.12.2021
(51) Int. Cl.: C21C 5/28, C21C 7/10, C21D 6/00, C21D 6/02, C21D 9/46, C22C 38/00, C22C 38/58, B22D 11/00, B22D 11/106

(54) **PRECIPITATION-HARDENED MARTENSITIC STAINLESS STEEL HAVING EXCELLENT FATIGUE-RESISTANCE CHARACTERISTICS**

(30) Priority: 24.12.2020 JP 2020215708
(71) Applicant: NIPPON STEEL Stainless Steel Corporation, Tokyo 100-0005 (JP)
(72) Inventor: SAITO, Shun, Tokyo 100-0005 (JP); FUKUMOTO, Shigeo, Tokyo 100-0005 (JP); EBIHAMA, Nobuhisa, Tokyo 100-0005 (JP); TANAKA, Akira, Tokyo 100-0005 (JP); KANEKO, Shigeru, Tokyo 100-0005 (JP)
(74) Representative: Papula Oy
(86) International application number: PCT/JP2021/045290
(87) International publication number: WO 2022/138194

(57) **Abstract**

A precipitation-hardening type martensitic stainless steel of the present invention has an excellent fatigue resistance. It has a steel composition comprising, by mass%, C: 0.080% or less; Si: 0.70 to 3.00%; Mn: 3.00% or less; Ni: 6.00 to 10.00%; Cr: 10.00 to 17.00%; P: 0.050% or less; S: 0.008% or less; Cu: 0.50 to 2.00%; Mo: 0.50 to 3.00%; Ti: 0.15 to 0.45%; Al: 0.070% or less; Ca: 0.0020% or less; Mg: more than 0.0020% and 0.0150% or less; N: 0.015% or less; O: 0.0070% or less and a number density of nonmetallic inclusions with an equivalent circle diameter of 10 um or more is 0.100/mm² or less.

## Description

### TECHNICAL FIELD

The present invention relates to a precipitation-hardening type martensitic stainless steel with excellent fatigue resistance.

### BACKGROUND ART

Precipitation-hardening type martensitic stainless steel sheets have low hardness before an aging treatment, and thus have excellent punching workability and forming workability. In addition, the stainless steel sheets after the aging treatment have high weld softening resistance while exhibiting high strength.

Therefore, the precipitation-hardening type martensitic stainless steel sheets have been heavily used as structural materials such as steel belts that require welding and a variety of spring materials, by utilizing properties that change before and after the aging treatment. Furthermore, these materials are also required to have excellent fatigue resistance.

As a means of improving fatigue resistance, it is effective to fine inclusions existing in a matrix phase. However, the precipitation-hardening type martensitic stainless steel sheet usually includes Si, Cu and Ti as precipitation-hardening elements, and thus N, which is inevitably contained in the steel, tends to react with Ti to easily generate coarse and angular TiN nonmetallic inclusions.

In addition, in the precipitation-hardening type martensitic stainless steel sheet, oxide-based nonmetallic inclusions and composite oxynitride nonmetallic inclusions of TiN and an oxide are easily generated as deoxidation products. Therefore, in order to improve fatigue resistance, it is desired to reduce the size of all of these nonmetallic inclusions.

Furthermore, Si contained in a steel has an action of increasing the activity of Ti, and thus there is also a problem in that it is difficult to suppress the generation and growth of TiN and composite oxynitride of TiN and an oxide.

A means for fining TiN inclusions in a steel, Patent Document 1, for example, discloses a maraging steel exhibiting a martensite structure with an excellent fatigue property. The maraging steel includes adding Zr to a molten steel to generate a fine Zr oxide, whereby TiN inclusions finely crystallize using the fine Zr oxide as a nucleus, and also, N is fixed as ZrN to suppress the formation of TiN.

The maraging steel described in Patent Document 1 is, however, premised on being produced by using a vacuum arc remelting method, and a N content is required to be reduced to 0.0020 mass% or less. It is difficult to achieve such a low N content from the viewpoint of cost constraints when the precipitation-hardening type martensitic steel is produced by a commonly used mass production method which is carried out in the order of melting (electric furnace), first refining (converter), second refining (AOD or VOD), and continuous casting, which are common production steps. Furthermore, there is also a problem that an immersion nozzle easily clogs during continuous casting by adding Zr to a molten steel. In addition, since the martensitic steel described in Patent Document 1 does not contain Si which increases the activity of Ti, it can be said that suppressing the generation of TiN is relatively easy compared to a case of a martensitic steel containing Si.

In addition, Patent Document 2 discloses a cold-rolled strip of maraging steel in which the size of oxide-based nonmetallic inclusions remaining in the steel strip is reduced by adding a small amount of Mg.

However, the cold-rolled strip of maraging steel described in Patent Document 2 is also premised on being produced by using a vacuum arc remelting (VAR) method or vacuum induction melting (VIM) method, and N content is required to be reduced to 0.0030 mass% or less. There is thus a problem that it is difficult to achieve such a low N content from the viewpoint of cost constraints when the precipitation-hardening type martensitic steel is produced by the above-described production method having common production steps. In addition, the martensitic steel described in Patent Document 2 achieves reduction in the sizes of nitride-based nonmetallic inclusions and oxide-based nonmetallic inclusions by respectively different methods, and does not disclose to reduce the sizes of various nonmetallic inclusions (to fine size) as a whole. Additionally, it can be said that it is relatively easy to suppress the generation of TiN, since Si, which increases the activity of Ti, is not contained.

Patent Document 1: Japanese Unexamined Patent Application, Publication No. 2019-11515
Patent Document 2: Japanese Patent No. 4110518

### DISCLOSURE OF THE INVENTION

### Problems to be Solved by the Invention

It is thus an object of the present invention is to provide a precipitation-hardening type martensitic stainless steel sheet with an excellent fatigue resistance, in which the number density of large nonmetallic inclusions existing in a matrix phase can be restricted, by reducing (fining) the size of nonmetallic inclusions, which have different compositions and which are contained in the steel, such as nitrides (e.g. TiN) and oxides (e.g., Al₂O₃, MgO and Ti₂O₃), as a whole, even when the martensitic stainless steel sheet contains Si in a steel, does not excessively limit N content, and is produced, for example, by a commonly used mass production method which is carried out in the order of melting (electric furnace), first refining (converter), second refining (AOD or VOD), and continuous casting.

### Means for Solving the Problems

The inventors have found that the coarse nonmetallic inclusions having an adverse effect on fatigue resistance are TiN-containing oxynitrides formed and grown with oxides such as MgO and MgO·Al₂O₃ (spinel) as nuclei. In this regard, when an effective oxide which is a nucleation site for TiN exists, using this oxide as a nucleus, the generation of TiN starts in a temperature range where the molten steel temperature is higher than the solidification start temperature, and then, when the molten steel temperature decreases to the solidification start temperature, the growth of TiN proceeds, resulting in the formation of coarse TiN-containing oxynitride particles. The inventors have also found that when a large number of oxides effective as this nucleation site exist in molten steel at a finely dispersed state, the formation of TiN starts from a temperature region where the molten steel temperature is higher than the solidification start temperature, with those fine oxides serving as nuclei, and then, when the molten steel temperature decreases to the solidification start temperature, already formed TiN does not grow, but each of a large number of fine oxides is used as a nucleus to newly formed oxynitrides including TiN, so that the size of each oxynitride becomes smaller while the number of formed oxynitrides increases. The inventors have further found that in order to form the small-sized oxynitrides, it is effective to form MgO rather than MgO·Al₂O₃ (spinel) as an oxide which is the nucleation site for TiN. That is, MgO has a lower degree of mismatch with TiN than MgO·Al₂O₃, and hereby, becomes more effective nucleation sites. While it is known that MgO·Al₂O₃ tends to cause clogging of immersion nozzles during casting, it has been found that the formation of a large amount of MgO·Al₂O₃ in molten steel is undesirable in terms of productivity. Finally, the inventors have found that TiN exists dispersedly in the molten steel at a fine precipitated state without coarsening, so that among the nonmetallic inclusions existing in the matrix, the number density of the specific nonmetallic inclusions having a large size of the equivalent circular diameter of 10 um or more can be reduced to 0.100/mm² or less, and whereby, the inventors have found to remarkably improve the fatigue resistance and have completed the present invention.

That is, the gist configuration of the present invention is as follows:
A first aspect relates to a precipitation-hardening type martensitic stainless steel with excellent fatigue resistance, having a steel composition comprising, by mass%, C: 0.080% or less; Si: 0.70 to 3.00%; Mn: 3.00% or less; Ni: 6.00 to 10.00%; Cr: 10.00 to 17.00%; P: 0.050% or less; S: 0.008% or less; Cu: 0.50 to 2.00%; Mo: 0.50 to 3.00%; Ti: 0.15 to 0.45%; Al: 0.070% or less; Ca: 0.0020% or less; Mg: more than 0.0020% and 0.0150% or less; N: 0.015% or less; O: 0.0070% or less; with the balance being Fe and inevitable impurities,
   wherein, among nonmetallic inclusions existing in a matrix phase, nonmetallic inclusions with an equivalent circle diameter of 10 um or more are not present, or even when the nonmetallic inclusions with the equivalent circle diameter of 10 um or more are present, a number density thereof is 0.100/mm² or less.
A second aspect relates to the precipitation-hardening type martensitic stainless steel according to aspect (i),
   wherein when a total mass of Al₂O₃, MgO and Ti₂O₃ obtained by analyzing an average compositional components in compounds contained in the nonmetallic inclusions with the equivalent circle diameter of 10 um or more is normalized to 100 mass%, a mass content (%) of MgO falls within a range defined by formula (1) shown below, and contents of Mg and O in the steel composition satisfy relationships of formulas (2) and (3) shown below,

   [%MgO] ≥ 80% (1)

   [%Mg]/[%O] ≥ 1.5 (2)

   [%Mg] × [%O] ≥ 1.0 × 10⁻⁵ (3)

   wherein [%MgO] shown in formula (1) represents the mass content (mass%) of MgO included in the nonmetallic inclusions with an equivalent circle diameter of 10 um or more, and [%Mg] and [%O] shown in formulas (2) and (3) respectively represent the contents (mass%) of Mg and O contained in the steel composition.
A third aspect relates to the precipitation-hardening type martensitic stainless steel according to aspect (i) or (ii), wherein the nonmetallic inclusions with the equivalent circle diameter of 10 um or more existing in the matrix phase have an equivalent circle diameter of 20 um or less.
A fourth aspect relates to the precipitation-hardening type martensitic stainless steel according to aspect (i), (ii), or (iii), wherein when a stress at which a number of repetitions without breaking reaches 10 million times in a Schenck-type bending and torsion fatigue test is made a fatigue limit stress, the fatigue limit stress is 550 MPa or more.
A fifth aspect relates to the precipitation-hardening type martensitic stainless steel according to any one of aspects (i) to (iv), wherein the number density of the nonmetallic inclusions with the equivalent circle diameter of 10 um or more among the nonmetallic inclusions existing in the matrix phase is 0.050 /mm² or less.
A sixth aspect relates to the precipitation-hardening type martensitic stainless steel according to aspect (v), wherein when a stress at which a number of repetitions without breaking reaches 10 million times in a Schenck-type bending and torsion fatigue test is made a fatigue limit stress, the fatigue limit stress is 600MPa or more.

### BRIEF DESCRIPTION OF THE DRAWINGS

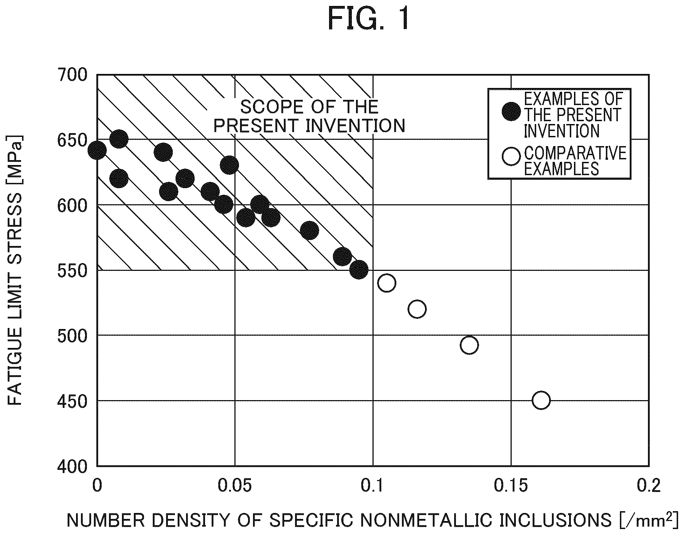

FIG. 1 is a plot of fatigue limit stress (MPa) (on the vertical axis) versus the number density (/mm²) of specific nonmetallic inclusions in the matrix phase (on the horizontal axis) with respect to stainless steel examples according to the present invention (sample Nos. 1 to 15) and comparative stainless steel examples (sample Nos. 16 to 21);

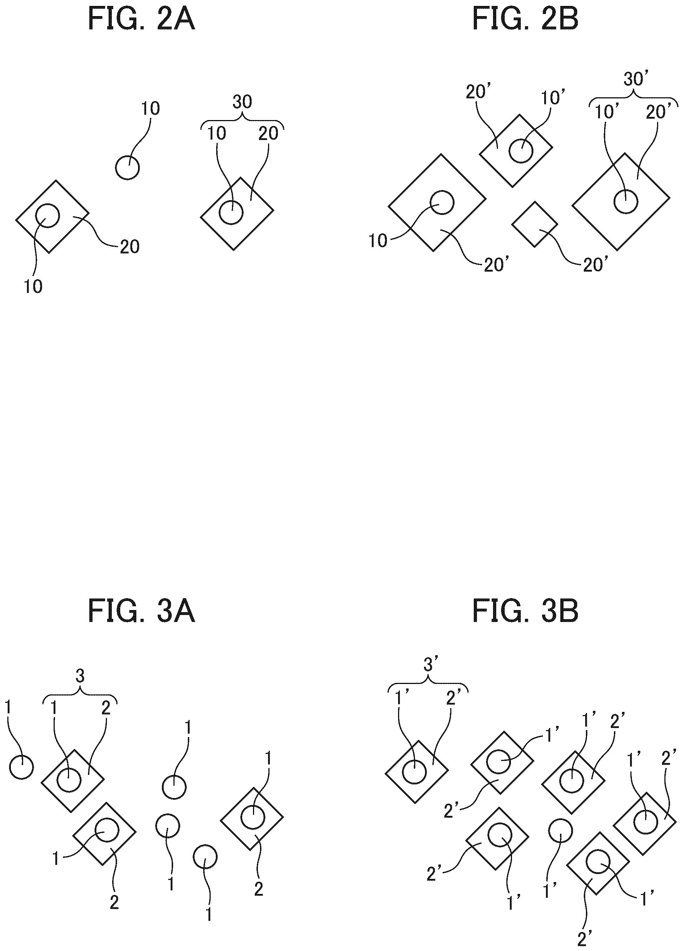

FIGS. 2A and 2B are schematic diagrams for illustrating the process of formation and growth of TiN on MgO nuclei during solidification of molten steel with a Mg content as low as at most 0.0020 mass%, in which FIG. 2A shows how TiN forms (precipitates) on MgO nuclei at melting temperature, and FIG. 2B shows what occurs when the molten steel shown in FIG. 2A is cooled to the solidification start temperature;
FIGS. 3A and 3B are schematic diagrams for illustrating the process of formation and growth of TiN on MgO nuclei during solidification of molten steel with a Mg content of more than 0.0020 mass% and 0.0150 mass% or less, in which FIG. 3A shows how TiN forms (precipitates) on MgO nuclei at melting temperature, and FIG. 3B shows what occurs when the molten steel shown in FIG. 3A is cooled to the solidification start temperature;

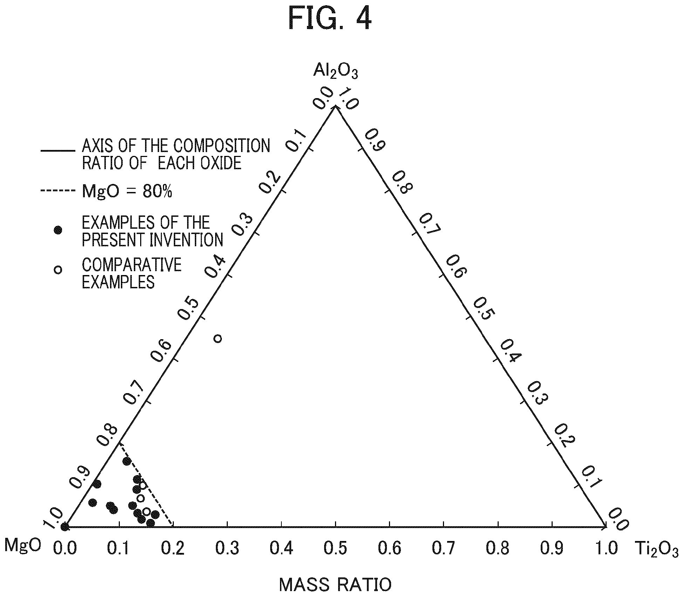

FIG. 4 is an Al₂O₃-MgO-Ti₂O₃ ternary phase diagram in which the calculated mass contents of Al₂O₃, MgO, and Ti₂O₃ in specific nonmetallic inclusions in the matrix phase of stainless steel examples according to the present invention (sample Nos. 1 to 15) and comparative stainless steel examples (sample Nos. 16 to 21) are plotted;

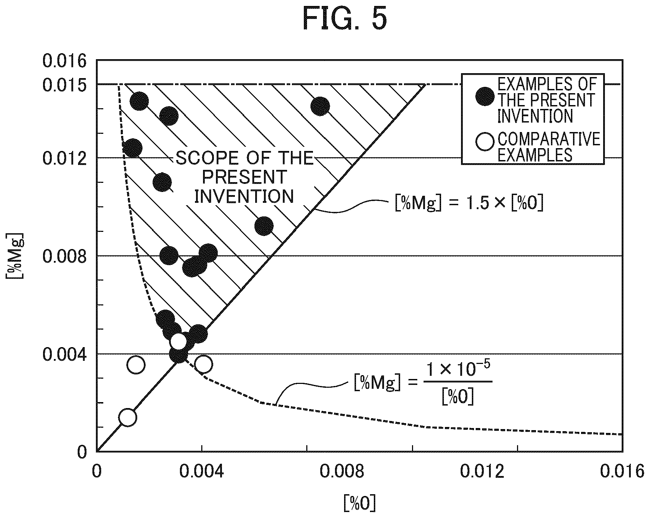

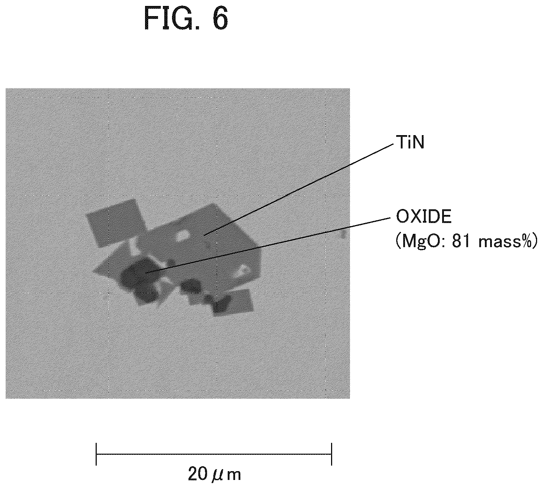

FIG. 5 is a plot of the relationship between the contents of Mg and O in the steel composition of stainless steel examples according to the present invention (sample Nos. 1 to 15) and comparative stainless steel examples (sample Nos. 16 to 21); FIG. 6 is a reflection electron composition image of a specific nonmetallic inclusion with a size of at least 10 um in the stainless steel of sample No. 1 (an example of the present invention); and

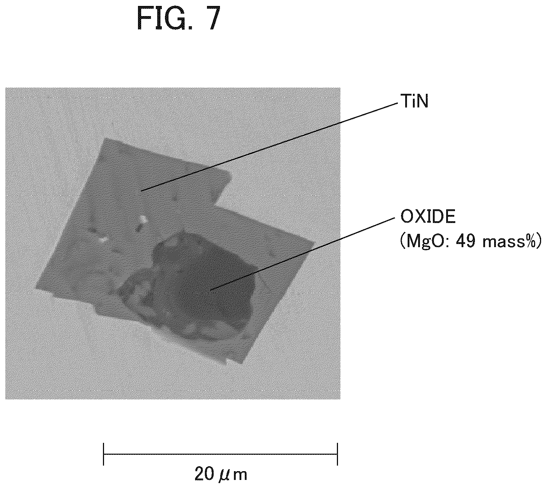

FIG. 7 is a reflection electron composition image of a specific nonmetallic inclusion with a size of at least 10 um in the stainless steel of sample No. 19 (a comparative example).

### PREFERRED MODE FOR CARRYING OUT THE INVENTION

Hereinafter, precipitation-hardening type martensitic stainless steels according to preferred embodiments of the present invention will be described in detail. The present invention is directed to a precipitation-hardening type martensitic stainless steel with excellent fatigue resistance, having a steel composition consisting essentially of, in mass%: C: 0.080% or less; Si: 0.70 to 3.00%; Mn: 3.00% or less; Ni: 6.00 to 10.00%; Cr: 10.00 to 17.00%; P: 0.050% or less; S: 0.008% or less; Cu: 0.50 to 2.00%; Mo: 0.50 to 3.00%; Ti: 0.15 to 0.45%; Al: 0.070% or less; Ca: 0.0020% or less; Mg: more than 0.0020% and 0.0150% or less; N: 0.015% or less; O: 0.0070% or less; and a balance of Fe and inevitable impurities, the precipitation-hardening type martensitic stainless steel having a matrix phase containing nonmetallic inclusions, the nonmetallic inclusions containing no nonmetallic inclusions with an equivalent circle diameter of 10 µm or more or containing nonmetallic inclusions with an equivalent circle diameter of 10 um or more (hereinafter, such inclusions will also be referred to as "specific nonmetallic inclusions") at a number density of 0.100/mm² or less.

### (I) Alloy Composition

The alloy composition of the precipitation-hardening type martensitic stainless steel sheet of the present invention and the action thereof will be described below. The precipitation-hardening type martensitic stainless steel of the present invention has a steel composition comprising, by mass%, C: 0.080% or less; Si: 0.70 to 3.00%; Mn: 3.00% or less; Ni: 6.00 to 10.00%; Cr: 10.00 to 17.00%; P: 0.050% or less; S: 0.008% or less; Cu: 0.50 to 2.00%; Mo: 0.50 to 3.00%; Ti: 0.15 to 0.45%; Al: 0.070% or less; Ca: 0.0020% or less; Mg: more than 0.0020% and 0.0150% or less; N: 0.015% or less; O: 0.0070% or less; with the balance being Fe and inevitable impurities. Hereinafter, "mass%" will be abbreviated simply as "%" in the following description of each component of the alloy composition.

The term "stainless steel" as used herein, means a material made of stainless steel (stainless steel material) whose specific shape is not limited. The shape of the steel material, for example, include a steel plate, a steel pipe, a steel wire or a steel bar.

### <C: 0.080% or less>

C (carbon) is an element which enhances the strength of a steel and is effective to suppress the δ ferrite phase generated at high temperatures. However, when the C content is above 0.080%, the hardness of the martensite phase generated by quenching is increased, and the cold working deformability is reduced. As a result, the forming workability becomes insufficient and also, it becomes difficult to obtain a single-phase martensite structure by cooling after a solution treatment. Furthermore, when the C content is above 0.080%, the generation of TiC is promoted in an annealed state, and toughness is reduced. Therefore, the C content is made 0.080% or less.

### <Si: 0.70 to 3.00%>

Si (silicon) is an element which has a great solid solution strengthening ability and the action of strengthening matrices. In addition, by adding Si with Ti and Ni, the fine coherent precipitates of intermetallic compounds including elements such as Si, Ti and Ni are generated during an aging treatment to enhance the strength of a steel. Such action is remarkable when the Si content is 0.70% or more. However, when Si content is above 3.00%, the generation of the δ ferrite phase is promoted, and the strength and toughness are reduced. Therefore, the Si content is made 0.70 to 3.00%.

### <Mn: 3.00% or less>

Mn (manganese) is an element which has the action of suppressing the generation of the δ ferrite phase in a high temperature region. However, when the Mn content is above 3.00%, the decrease of toughness in a welded portion and the decrease of welding workability are easily caused. Therefore, the Mn content is made 3.00% or less.

### <Ni: 6.00 to 10.00%>

Ni (nickel) is an element which contributes to precipitation hardening and suppresses the generation of the δ ferrite phase. In the precipitation-hardening type martensitic stainless steel of the present invention, it is necessary to contain 6.00% or more of Ni in order to maintain high strength and high toughness without reducing age hardening ability. However, when the Ni content is above 10.00%, since the amount of the retained austenite phase after quenching increases, the required strength cannot be obtained. Therefore, the Ni content is made 6.00 to 10.00%.

### <Cr: 10.00% to 17.00%>

It is required to contain Cr (chromium) of 10.00% or more in order to obtain corrosion resistance as a stainless steel. However, when the Cr content is above 17.00%, the δ ferrite phase and the retained austenite phase are generated, causing a decrease in strength in the welded portion. Therefore, the Cr content is made a range of 10.00 to 17.00%.

### <P: 0.050% or less>

P (phosphorus) is an impurity, and is an element which promotes hot workability and solidification cracking at the time of production, and also reduces ductility due to hardening. In this respect, the lower the P content is, the more preferable it is, and thus the upper limit thereof is made 0.050%.

### <S: 0.008% or less>

S (sulfur) exists in a steel as nonmetallic inclusions such as MnS, and adversely affects fatigue strength, toughness, corrosion resistance, and the like. In this respect, the lower S content is, the more preferable it is, and thus the upper limit thereof is made 0.008%.

### <Cu: 0.50 to 2.00%>

Cu (copper) is an effective element to ensure corrosion resistance under a sulfurous acid gas-based corrosive environment, and when the Cu content is 0.50% or more, the enhancement of corrosion resistance becomes prominent. However, when the Cu content is above 2.00%, hot workability deteriorates, and defects such as cracks may occur on the surface of the processed material. In addition, when the strength is increased, the toughness tends to decrease. Therefore, the Cu content is made 0.50 to 2.00%.

### <Mo: 0.50 to 3.00%>

Mo (molybdenum) is an element which has the action of enhancing strength and toughness. It is required that the Mo content is made 0.50% or more to exhibit such an action. However, when Mo content is above 3.00%, not only the effect of enhancing the strength and the toughness corresponding to the increase in the Mo content cannot be obtained, but also the generation of the δ ferrite phase is promoted and the strength of the welded portion is easily reduced. Therefore, the Mo content is made 0.50 to 3.00%.

### <Ti: 0.15 to 0.45%>

Ti (titanium) is an element which contributes to precipitation hardening, and it is required to contain 0.15% or more of Ti to obtain high strength. However, when Ti of more than 0.45% is contained, the decrease of the toughness is generated due to excessive precipitation hardening reactions. Therefore, the Ti content is made 0.15 to 0.45%.

### <Al: 0.070% or less>

Al (aluminum) is an element that acts as a deoxidation agent. However, an Al content of more than 0.070% may tend to cause degradation of weldability. Thus, the Al content is 0.070% or less.

### <Ca: 0.0020% or less>

Ca (calcium) is an element which contributes to an improvement in hot workability. However, when Ca is above 0.0020%, large-sized CaO-SiO₂-Al₂O₃-based inclusions are easily generated, and when such inclusions exist in a steel, there is a possibility that they may adversely affect fatigue resistance, and also easily cause surface defects. Therefore, the Ca content is made 0.0020% or less.

### <Mg: More than 0.0020% and 0.0150% or less>

Mg (magnesium), which is sometimes added as a deoxidizing element, and is an element that refines the structure of the slab and contributes to the improvement of hot workability and formability. Mg is known to precipitate as oxide-based nonmetallic inclusions such as MgO and MgO·Al₂O₃ (spinel) in the matrix phase because Mg easily combines with oxygen. Conventionally, since MgO has been considered as an oxide that serves as the nucleus of TiN and promotes the formation and growth of TiN, it has been considered desirable from the viewpoint of improving fatigue resistance to reduce the amount of MgO precipitated in molten steel by reducing the Mg content in steel. However, the inventors have conducted extensive studies on improving the fatigue resistance of precipitation-hardening type martensitic stainless steel, and as a result, the inventors have found that even if Mg of more than 0.0020% is contained in the steel, by limiting the Mg content in the steel to an appropriate range in relation to the O content, the degree of supersaturation of Mg is increased, and the reaction of Mg + O → MgO is promoted, a large number of fine MgO particles can be dispersed and precipitated in the molten steel, and a large number of finely dispersed and precipitated MgO serve as nucleation sites for TiN, and TiN is finely produced (precipitated), so that the growth of TiN is suppressed, and oxynitrides of MgO and TiN can exist in a fine state without coarsening in molten steel, and as a result, it can improve the fatigue resistance. In the present invention, therefore, the Mg content is more than 0.0020%, preferably 0.0040% or more, and more preferably 0.0060% or more. The Mg content of more than 0.0150% may tend to reduce weldability and corrosion resistance. Thus, an upper limit of the Mg content is made 0.0150%.

### <N: 0.015% or less>

N (nitrogen) has high affinity with Ti, and a part of the Ti component which functions as a precipitation-hardening element is consumed by the generation of TiN. Furthermore, TiN inclusions become larger depending on the increase in the N content, resulting in the decrease in fatigue strength and toughness. Therefore, a lower N content is more preferred; however, the excessive decrease in N increases costs. To this end, in the present invention, the N content is in a range which is easily achieved even when produced, for example, by a commonly used mass production method, carried out in the order of melting (electric furnace), first refining (converter), second refining (AOD or VOD), and continuous casting, that is, is made 0.015% or less.

### <O: 0.0070% or less>

O (oxygen) is a constituent element of oxide-based nonmetallic inclusions, and, when large-sized oxide-based nonmetallic inclusions are generated, they deteriorate the cleanliness of steel, and cause surface defects. To this end, a lower O content is more preferred, and specifically, it is made 0.0070% or less.

### <The balance: Fe and inevitable impurities>

The balance other than the above-described components is Fe (iron) and inevitable impurities. The term "inevitable impurities" referred to here means impurities at a content level that can be inevitably contained in the production steps. Examples of components as inevitable impurities include B, V, Nb, Zr, Hf, W, Sn, Co, Sb, Ta, Ga, Bi, REM and the like. The content of these inevitable impurities may be 0.5% or less for each component, and the total amount of components of inevitable impurities may be 2.0% or less.

### (II) Nonmetallic inclusions existing in matrix phase

In the precipitation-hardening type martensitic stainless steel sheet of the present invention, it is required that among nonmetallic inclusions existing in a matrix phase, the specific nonmetallic inclusions with the equivalent circle diameter of 10 um or more be not present, or even when the specific nonmetallic inclusions are present, the number density of the specific nonmetallic inclusions be 0.100/mm² or less.

As a result of studies for improving the fatigue resistance of the precipitation-hardening type martensitic stainless steel sheet having the above composition, the inventors have found that when among nonmetallic inclusions existing in a matrix phase, nonmetallic inclusions with a larger size were present in large quantities, they adversely affect the fatigue properties. The inventors also found that when specific nonmetallic inclusions with the equivalent circle diameter of 10 um or more are not present in a matrix phase, or even when the specific nonmetallic inclusions are present, the fatigue resistance was significantly enhanced by controlling the number density of the specific nonmetallic inclusions to 0.100/mm² or less. The term "equivalent circle diameter" referred to here means a value converted into the diameter of a circle having an area equal to the projected area of a particle in a nonmetallic inclusion appearing on an observed surface.

FIG. 1 is a plot of the relationship between the number density (/mm²) of specific nonmetallic inclusions existing in the matrix phase and the fatigue limit stress (MPa) measured in the stainless steels of the examples of the present invention (samples No. 1 to 15) and the stainless steels of the comparative examples (samples No. 16 to 21). In FIG. 1, the plotted solid circles (•) represent the examples of the present invention, and the plotted open circles (o) represent the comparative examples. From the results shown in FIG. 1, All the stainless steels of the present invention examples having a steel composition containing each of the above-described components in an appropriate range and having a number density of specific non-metallic inclusions existing in the matrix phase of 0.100/mm² or less have a fatigue limit stress of 550 MPa or more while indicating that they have excellent fatigue resistance.

In order to make the number density of the specific non-metallic inclusions existing in the matrix phase 0.100 /mm² or less, by limiting the Mg content in the steel to an appropriate range in relation to the O content, by limiting the Mg content in the steel to an appropriate range in relation to the O content, the degree of supersaturation of Mg is increased, and the reaction of Mg + O → MgO is promoted, a large number of fine MgO particles can be dispersed and precipitated in the molten steel, and the MgO dispersed and precipitated in a fine state becomes a nucleation site for TiN, and whereby TiN may also be dispersed and precipitated in a fine state.

FIGS. 2A and 2B are conceptual diagrams for illustrating the process of formation and growth of TiN with MgO as nuclei during solidification of molten steel when the Mg content in the steel composition is as low as 0.0020% by mass or less. Fig. 2A shows the state in which TiN is generated (precipitated) with MgO as nuclei at the melting temperature, and Fig. 2B shows a state in which the molten steel is further cooled from the state in FIG. 2A and has dropped to the solidification start temperature. FIGS. 3A and 3B are conceptual diagrams for illustrating the process of formation and growth of TiN with MgO as nuclei during solidification of molten steel when the Mg content in the steel composition is more than 0.0020 mass% and 0.0150 mass% or less. Fig. 3A shows the state in which TiN is generated (precipitated) with MgO as nuclei at the melting temperature, and Fig. 3B shows a state in which the molten steel is further cooled from the state in FIG. 3A and has dropped to the solidification start temperature.

The inventors have found that when the steel composition has a Mg content as low as 0.0020 mass% or less, as shown in FIG. 2A, the amount of MgO 10 formed (precipitated) in the molten steel in the melting temperature range is small, so the number of MgO 10 serving as nucleation sites for the formation of TiN 20 is reduced, so that as shown in FIG. 2B, the growth of TiN 20' cannot be suppressed during the decrease from the melting temperature to the solidification start temperature, and TiN 20' may grow alone, or form oxynitride 30' together with MgO oxide 10' and MgO·Al₂O₃ (spinel) to coarsen. Since the coarsened oxynitride 30' is very hard, it is hardly crushed during hot rolling or cold rolling and remains in the matrix phase in the coarsened size (for example, a size with an equivalent circular diameter of more than 20 pm), and as a result, it adversely affects the fatigue resistance.

On the other hand, the inventors also have found that when the Mg content in the steel composition is more than 0.0020mass%, as shown in FIG.3A, a large amount of MgO 1 is generated (precipitated) in the molten steel in the melting temperature range, and the number of MgO 1 serving as nucleation sites when TiN 2 is generated increases, so that as shown in FIG.3B, during the decrease from the melting temperature to the solidification start temperature, TiN 2' can be generated (precipitated) in a dispersed state without coarsening the size of the entire oxynitride 3' using each of a large number of MgO oxides 1' as a nucleus, and coarse non-metallic inclusions are less likely to exist in the matrix phase, and as a result, it can significantly improve fatigue resistance. In the present invention, therefore, among nonmetallic inclusions existing in the matrix phase, nonmetallic inclusions with an equivalent circle diameter of 10 um or more are not present, or even when the nonmetallic inclusions with the equivalent circle diameter of 10 um or more are present, the number density thereof is made 0.100/mm² or less.

Furthermore, in the present invention, the specific nonmetallic inclusions in the matrix phase preferably have an equivalent circle diameter of 20 um or less. This helps to further improve the fatigue resistance.

### (III) Mass Content of MgO contained in Nonmetallic Inclusions existing in Matrix Phase and Relationship between Contents of Mg and O in the Steel Composition

In the present invention, it is preferable that when a total mass of Al₂O₃, MgO and Ti₂O₃ obtained by analyzing an average compositional components in compounds contained in the nonmetallic inclusions with the equivalent circle diameter of 10 um or more is normalized to 100 mass%, a mass content (%) of MgO falls within a range defined by formula (1) shown below, and contents of Mg and O in the steel composition satisfy relationships of formulas (2) and (3) shown below.

[%MgO] ≥ 80% (1)

[%Mg]/[%O] ≥ 1.5 (2)

[%Mg] × [%O] ≥ 1.0 × 10⁻⁵ (3)

Here, [%MgO] shown in formula (1) represents the mass content (mass%) of MgO included in the nonmetallic inclusions with an equivalent circle diameter of 10 um or more, and [%Mg] and [%O] shown in formulas (2) and (3) respectively represent the contents (mass%) of Mg and O contained in the steel composition.

In order to make the oxide an effective nucleation site for TiN, when a total mass of Al₂O₃, MgO and Ti₂O₃ obtained by analyzing an average compositional components in compounds contained in the specific nonmetallic inclusions is normalized to 100 mass%, it was found to be effective to make the content of MgO 80% or more ([%MgO]≧80). That is, when the content of MgO is less than 80%, the effect as an effective nucleation site is insufficient, and as a result, the growth of TiN cannot be suppressed, and there is a tendency to promote coarsening.

FIG. 4 is a Al₂O₃-MgO-Ti₂O₃ ternary phase diagram in which the calculated contents of Al₂O₃, MgO and Ti₂O₃ including in the specific nonmetallic inclusions existing in the matrix phase of stainless steels which are examples of the present invention (sample Nos. 1 to 15) and are comparative examples (sample Nos. 16 to 21) are plotted. From the results shown in FIG. 4, it can be seen that all the stainless steels of the examples of the present invention (Sample Nos. 1 to 15) with excellent fatigue resistance have the MgO content of 80% or more ([%MgO] ≥ 80%). The fact that MgO content is 80% or more means that the total contents of Al₂O₃ and Ti₂O₃ is 20% or less, that is, it means that the specific nonmetallic inclusions are mainly composed of MgO oxide and the amount of oxides of MgO·Al₂O₃ (spinel) contained is small.

In addition, in order to satisfy [%MgO] ≥ 80%, it is preferable that the ratio of Mg content with respect to O content in the steel composition is made 1.5 or more ([%Mg]/[%O] ≥ 1.5). The value of [%Mg]/[%O] increases as the O content is reduced, but excessive deoxidation tends to increase production costs. Therefore, the value of [%Mg]/[%O] is preferably 15 or less ([%Mg]/[%O] ≤ 15). Furthermore, in order to satisfy [%MgO] ≥ 80%, it is preferable to control the amount of MgO contained in the slag in the second refining step to 5% by mass or more. On the other hand, when the amount of MgO in the slag is more than 40mass%, the melting point of the slag increases and the fluidity decreases, so the refining reaction efficiency tends to decrease. Therefore, MgO content in the slag is preferably 40 mass% or less.

FIG. 5 is a plot of the relationship between the contents of Mg and O in the steel composition of the stainless steels which are examples of the present invention (sample Nos. 1 to 15) and are comparative examples (sample Nos. 16 to 21). From the results shown in FIG. 5, All of the stainless steels of the examples of the present invention (Sample Nos. 1 to 15) with excellent fatigue resistance have the ratio of Mg content with respect to O content in the steel composition of 1.5 or more ([%Mg]/[%O] ≥ 1.5).

Furthermore, in the present invention, it was found that increasing the degree of supersaturation of Mg contained in steel in relation to O is effective in order to disperse and precipitate a large amount of MgO oxides in molten steel. As a result of intensive studies by the present inventors, it was found that the numerical value of the product of the Mg content and the O content in the steel composition is 1.0×10⁻⁵ or more ([%Mg] × [%O] ≥ 1.0×10⁻⁵) is preferable in that a sufficient amount (number) of MgO, which is effective as a nucleation site for TiN, can be generated. However, when the value of the product of the Mg content and the O content in the steel composition is excessively increased, the cleanliness of the steel is deteriorated. To this end, it is preferable that the product of the Mg content and the O content in the steel composition is made 10×10⁻⁵ or less ([%Mg] × [%O] ≤ 10×10⁻⁵).

From the results shown in FIG. 5, It can be seen that all the stainless steels of the examples of the present invention (Sample Nos. 1 to 15) with excellent fatigue resistance have a numerical value of the product of the Mg content and the O content in the steel composition of 1.0× 10⁻⁵ or more ([%Mg] × [%O] ≥ 1.0×10⁻⁵).

### (IV) Fatigue Resistance

When the stress at which the number of repetitions reaches 10 million times without breaking in a Schenk-type bending and torsion fatigue test is made a fatigue limit stress, the precipitation-hardening type martensitic stainless steel of the present invention has a fatigue limit stress of 550 MPa or more and more preferably, 600 MPa or more, so it has an excellent fatigue resistance. It should be noted that the fatigue limit stress of the precipitation-hardening type martensitic stainless steel is defined as follows. First, a test piece cut out of a stainless steel sheet with a thickness of 2.7 mm to 3.2 mm is subjected to a cycle fatigue test using a Schenck-type bending and torsion fatigue testing machine (capacity 39 N·m) under the conditions of test waveform: sinusoidal waveform, test speed: 60 Hz, test environment: room temperature in an atmosphere and stress ratio: R = -1 (reversible), the maximum stress at which the sample is not broken at 10 million (10⁷) times is measured, and this measured stress is defined as fatigue limit stress (MPa).

### (V) Method for producing precipitation-hardening type martensitic Stainless Steel according to an embodiment of the present invention

Next, a preferred method for producing the precipitation-hardening type martensitic stainless steel of the present invention will be described below.

The precipitation-hardening type martensitic stainless steel sheet of the present invention can be produced by using general melting facility for stainless steels. The method for producing the precipitation-hardening type martensitic stainless steel sheet of the present invention typically includes a case in which a melting step (electric furnace), a first refining step (converter), a second refining step (AOD (Argon Oxygen Decarburization) or VOD (Vacuum Oxygen Decarburization)) and a casting step (continuous casting or ingot casting)) are performed in this order. A case where after raw materials for the stainless steel are melted in the electric furnace, the first refining is performed in a converter, next, the second refining is performed by a VOD method, and then, the continuous casting is performed will now be described.

In the melting step, scrap and alloys used as raw materials for stainless steel are melted in the electric furnace to generate molten stainless iron, and the generated molten stainless iron is poured into a converter, which is a refining furnace.

In the first refining step, a rough decarburization treatment, in which carbon contained in the molten stainless iron is removed by blowing oxygen to it in the converter, is carried out to generate a molten stainless steel and a slag including carbon oxides and impurities. The molten stainless steel generated in the first refining step is tapped into a steel ladle and transferred to the second refining step, and the slag is removed at this time.

In the second refining step, the molten stainless steel is put in a vacuum degassing apparatus (VOD), which is a vacuum refining furnace, with the molten steel pot to carry out a finishing decarburization treatment. A pure molten stainless steel is generated by the finishing decarburization treatment of the molten stainless steel. Especially, in the vacuum degassing apparatus (VOD), decarburization and denitrification are carried out to predetermined concentrations by oxygen blowing. A large amount of blown oxygen is dissolved in the molten steel at this time, and thus raw materials are adjusted and added so that the concentrations of easily oxidizable elements such as Al, Ti and Si will be predetermined concentrations after deoxidation. Mg may be added using a magnesium alloy such as Ni-Mg and Si-Mg. Since pure Mg has a low boiling point of 1091°C, it is effective from the viewpoint of improving the yield to add it after adjustment of other components or the like is completed. A method for effectively containing Mg in the molten steel to improve the yield, for example, may be a method in which the above-mentioned magnesium alloy is wrapped with an iron skin so as to form a covered wire and then, this covered wire is added to the molten steel. By adopting such a method, the reaction of the magnesium alloy with the slag phase existing on the upper surface of the molten steel can be suppressed as much as possible, and as a result, it becomes possible to effectively contain magnesium in the molten steel. Moreover, as described above, it is preferable to adjust the amount of MgO contained in the slag in this secondary refining step.

In the casting step, continuous casting may be carried out by a common method. For example, the molten steel pot is taken out of the vacuum degassing apparatus (VOD) and set to a continuous casting apparatus (CC), and the molten stainless steel in the molten steel pot is poured into the continuous casting apparatus, and by a casting mold provided in the continuous casting apparatus, for example, a slab-shaped stainless steel billet can be produced (cast). However, in order to suppress an increase in the concentration of N, it is desirable to avoid the contact between the molten steel and the atmosphere as much as possible. Specifically, it is preferable to suppress an increase in the concentration of N by sealing the molten steel in a tundish (TD) using Ar gas and powders.

After that, the obtained slab-shaped stainless steel billet is subjected to hot working including hot rolling to obtain a hot-rolled steel sheet. The heating temperature for hot rolling may be 1100 to 1250°C and the thickness of the hot rolled steel sheet may be, for example, 3.0 to 7.0 mm. Next, the hot-rolled steel sheet is subjected to annealing pickling, cold rolling, and aging treatment to obtain a precipitation-hardening type martensitic stainless steel sheet having excellent fatigue resistance. The cold rolling step may be performed multiple times including the intermediate annealing step. After each heat treatment step, a pickling treatment is performed as necessary. The heat treatment temperature can be, for example, 900 to 1100°C for 30 to 150 seconds, and the aging treatment can be, for example, 400 to 600°C. for 10 to 80 minutes.

The embodiment of the present invention has been described above. It should be noted, however, that the present invention is not limited to the above embodiment. The present invention encompasses all aspects included in the concept and claims of the present invention, and can be modified to various aspects within the scope of the present invention.

### EXAMPLES

The inventive examples and comparative examples will now be described to further clarify the effect of the present invention. It should be noted, however, that the present invention is not limited to these examples.

### <Sample Nos. 1 to 15 (Examples of the Present Invention) and sample Nos. 16 to 21 (Comparative Examples)>

First, raw materials for a stainless steel were melted in an electric furnace (melting step). In the melting step, scrap and alloys used as raw materials for the stainless steel are melted in an electric furnace to generate hot metal for the stainless steel, and the generated hot metal for the stainless steel is poured into a converter, which is a refining furnace, to carry out first refining (first refining step). In the first refining step, the rough decarburization treatment is carried out to remove carbon contained by blowing oxygen to the stainless steel hot metal in the converter, so that the stainless molten steel and slag containing carbon oxides and impurities are generated. Next, the stainless molten steel from which the slag has been removed is subjected to second refining which performs a finish decarburization treatment by the vacuum degassing apparatus (VOD) (second refining step). In the second refining step, decarburization and denitrification are carried out to predetermined concentrations by oxygen blowing in VOD. A large amount of blown oxygen is dissolved in the molten steel at this time, and thus raw materials are adjusted and added so that the concentrations of easily oxidizable elements such as Al, Ti and Si will be predetermined concentrations after deoxidation. Mg was also added in the form of a covered wire into the molten steel. The covered wire was formed by wrapping a magnesium alloy, such as Ni-Mg or Si-Mg, with iron skin. Next, the molten steel having components adjusted to steel composition shown in Table 1 was subjected to continuous casting to obtain a slab-shaped stainless steel billet. After that, the obtained stainless steel billet was hot-rolled at a temperature of 1100 to 1250°C, then annealed at 900 to 1100°C for 30 to 150 seconds, then pickled and cold-rolled, and then, aged at 400 to 600°C for 10 to 80 minutes to prepare a precipitation-hardening type martensitic stainless steel sheet (test cold-rolled sheet) with a thickness of 1.0 to 3.5 mm.

### [Evaluation method]

Using each of the above test sheets, evaluations described below were made. Conditions of each evaluation are as follows.

### (1) Evaluation of Nonmetallic Inclusions

A small piece for observation having 40 mm square was taken from the center portion of the width in each of the obtained test sample sheets, and the surfaces of the small pieces were polished with #120 to #1000 emery paper and then mirror-finished by buffing using diamond paste. The surface of the mirror-finished small piece was observed at 400 to 500 arbitrary locations in a visual field region (square region of about 32 mm × about 32 mm) having a visual field area of 1000 mm² at a magnification of 100 times by using an energy dispersive X-ray analyzer (EDX). The observation target was made specific nonmetallic inclusions with the equivalent circle diameter of 10 um or more, and the whole of the observed inclusions was analyzed by EDX. The inclusions were considered to be one if they were integrated, and in cases where they were not integrated but were close to each other, they were defined as the same inclusion if the shortest distance between the adjacent inclusions is shorter than the smaller equivalent circle diameter of the adjacent inclusions, and were defined as separate inclusions if the shortest distance between the adjacent inclusions is longer than the smaller equivalent circle diameter of the adjacent inclusions. The analysis values were corrected by the ZAF method. The number density of the specific nonmetallic inclusions (/mm²) was calculated as the number of specific nonmetallic inclusions per visual field area (1000 mm²). The composition of the specific nonmetallic inclusions was calculated as follows, and the mass percentages (mass%) when the total mass of Al₂O₃, MgO and Ti₂O₃ was made 100 mass% were determined. First, the amount of TiN in specific nonmetallic inclusions was determined from the concentration of N in the EDX analysis by the stoichiometric ratio. Specifically, the concentration of Ti existing (consumed) as TiN was calculated as Ti* from "N concentration (analysis value) × Ti atomic weight/N atomic weight". Next, the concentration of Ti existing as Ti oxides was calculated as the concentration of Tiₒₓ by subtracting the Ti* value from the concentration of Ti (analysis value). Next, the values of the concentration of Al and the concentration of Mg and the concentration of Tiₒₓ obtained by the EDX analysis were converted into Al₂O₃, MgO and Ti₂O₃. Finally, the mass content (mass%) of MgO was calculated based on the total mass of Al₂O₃, MgO, and Ti₂O₃, which was normalized to 100 mass%. Table 2 shows the number density (/mm²) of the specific nonmetallic inclusions, the presence or absence of specific nonmetallic inclusions with equivalent circle diameters of more than 20 um, and the mass content (%) of MgO in the specific nonmetallic inclusions. Also, the mass ratios of Al₂O₃, MgO and Ti₂O₃ in the specific nonmetallic inclusions in Sample Nos. 1 to 21 are plotted in the Al₂O₃-MgO-Ti₂O₃ ternary phase diagram of FIG.4

### (2) Evaluation of Fatigue Resistance

A fatigue test piece with a predetermined size was cut out of each test cold-rolled sheet so that the rolling direction of the test cold-rolled sheet is made the longitudinal direction of the fatigue test piece, and the surface and end face of the fatigue test piece were dry-polished with #600 emery paper. Subsequently, it was subjected to a heat treatment at 480°C for 1 hour, and then air-cooled to normal temperature. The fatigue test was carried out by a Schenck-type bending and torsion fatigue testing machine. The test was finished when the test piece was broken or when the number of repetitions reached 10 million times, and the stress at which the number of repetitions without breaking reached 10 million times was made a fatigue limit stress (MPa). The test environment was made room temperature in the atmosphere. The fatigue resistance are evaluated as "Excellent" (indicated by bullseye symbol (⊙)) when the fatigue limit stress was 600 MPa or more, "Good" (indicated by circle symbol (o)) when the fatigue limit stress was 550 MPa or more and less than 600 MPa, and "Poor" (indicated by cross symbol (x)) when the fatigue limit stress was less than 550 MPa. The evaluation results are shown in Table 2. The fatigue limit stress plotted against the number density of the specific nonmetallic inclusions existing in the matrix phase of sample Nos. 1 to 21 is also shown in FIG. 1.

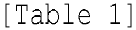

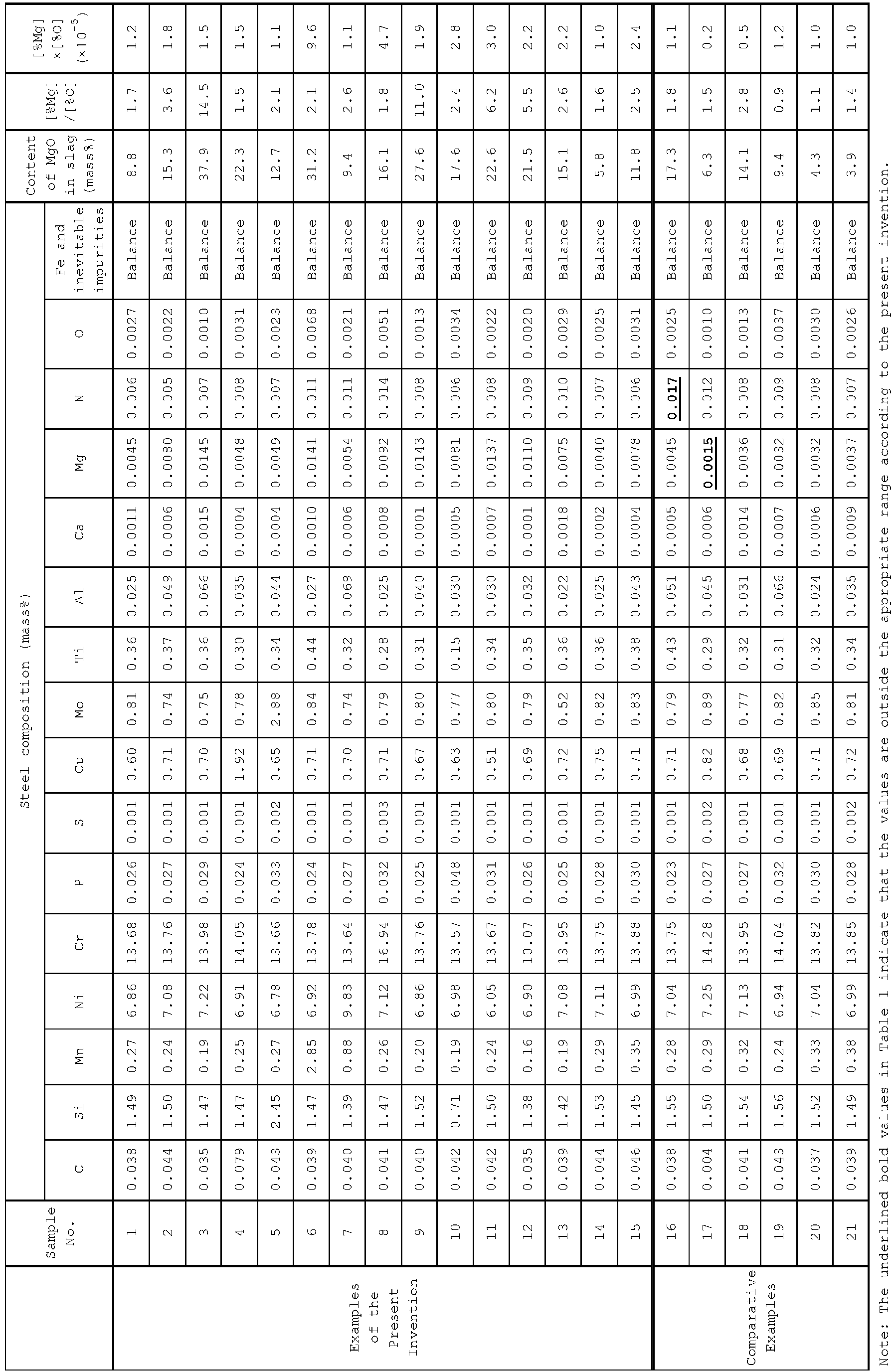

**[Table 2]**

| | Sample No. | Specific nonmetallic inclusions | | | Fatigue resistance | |
|---|---|---|---|---|---|---|
| | | Number density of specific nonmetallic inclusions with a circle equivalent diameter of 10 µm or more (/mm²) | Presence or absence of specific nonmetallic inclusions with equivalent circle diameters of more than 20 um | Mass content of MgO (%) | Fatigue limit stress (MPa) | Evaluation |
| Examples of the Present Invention | 1 | 0.077 | Absence | 81 | 580 | ○ |
| | 2 | 0.046 | Absence | 89 | 600 | ⊙ |
| | 3 | 0.008 | Absence | 89 | 650 | ⊙ |
| | 4 | 0.063 | Absence | 82 | 590 | ○ |
| | 5 | 0.089 | Presence | 84 | 560 | ○ |
| | 6 | 0.008 | Absence | 100 | 620 | ⊙ |
| | 7 | 0.059 | Absence | 100 | 590 | ○ |
| | 8 | 0.054 | Absence | 85 | 590 | ○ |
| | 9 | 0.041 | Absence | 82 | 610 | ⊙ |
| | 10 | 0.048 | Absence | 81 | 630 | ⊙ |
| | 11 | 0.024 | Absence | 89 | 640 | ⊙ |
| | 12 | 0.032 | Absence | 92 | 620 | ⊙ |
| | 13 | 0.026 | Absence | 85 | 610 | ⊙ |
| | 14 | 0.095 | Presence | 85 | 550 | ○ |
| | 15 | 0 | Absence | 91 | 640 | ⊙ |
| Comparative Examples | 16 | **0.161** | Presence | 83 | **450** | **x** |
| | 17 | **0.135** | Presence | 81 | **490** | **x** |
| | 18 | **0.116** | Absence | 83 | **520** | **x** |
| | 19 | **0.105** | Absence | 49 | **540** | **x** |
| | 20 | **0.123** | Absence | 74 | **500** | **x** |
| | 21 | **0.118** | Absence | 71 | **530** | **x** |

| | | | | | | |
|---|---|---|---|---|---|---|
| Note: The underlined bold letters in Table 2 indicate that they are outside the appropriate range according to the present invention or the fatigue limit stress values are so small as to indicate poor fatigue resistance. | | | | | | |

From the results shown in Tables 1 and 2 and FIGS. 1 and 5, all of sample Nos. 1 to 15, which are examples of the present invention, had the steel compositions and the number densities of specific non-metallic inclusions within the appropriate range, so the fatigue limit stress was 550 MPa or more, and whereby the fatigue resistance was good or excellent. In particular, as sample No. 15 has no specific nonmetallic inclusions, and sample Nos. 2, 3, 6 and 9 to 13 all had a small number density of non-metallic inclusions, which have the equivalent circular diameter of 10 um or more, of 0.050/mm² or less, the fatigue limit stress was 600 MPa or more and hence, they had an excellent fatigue resistance. On the other hand, as samples Nos. 16 to 21 all had the number density of the specific nonmetallic inclusions out of the appropriate range, they had a fatigue limit stress of less than 550 MPa and hence, they had a poor fatigue resistance.

For reference, sample Nos. 1 to 15 (examples of the present invention) and sample Nos. 16 to 21 (comparative examples) are plotted in the Al₂O₃-MgO-Ti₂O₃ ternary phase diagram of Fig. 4.

FIG. 6 is a reflection electron composition image of a nonmetallic inclusion with a size of 10 um or more in the stainless steel sheet of sample No. 1 which is an example of the present invention. The portion that looks black in FIG. 6 is the portion of the oxide composition A mainly composed of MgO (mass ratio: 81%), and the portion that looks gray is TiN. Further, FIG. 7 is a reflection electron composition image of a nonmetallic inclusion with a size of 10 um or more in the stainless steel sheet of Sample No. 19, which is a comparative example. The part that looks black in FIG. 7 is the part of the oxide composition B that contains not only MgO (mass ratio: 49%) but also other oxides such as MgO·Al₂O₃ (spinel) in large amounts, and the part that looks gray is TiN.

In the case of the example of the present invention (Sample No. 1) shown in FIG. 6, it can seen that the amount of TiN (gray part in FIG. 6) generated around the oxide composition A (black part in FIG. 6) mainly composed of MgO is small. On the other hand, in the case of the comparative example (sample No. 19) shown in FIG. 7, it can seen that TiN (gray portion in FIG. 7) grows around the oxide composition B (black portion in FIG. 7) containing not only MgO but also other oxides such as MgO·Al₂O₃ (spinel) in large amounts and coarse non-metallic inclusions are generated (precipitated).

### EXPLANATION OF REFERENCE NUMERALS

- 1, 10:: MgO
- 2, 20:: TiN
- 3, 30:: Oxynitride

## Claims

1. A precipitation-hardening type martensitic stainless steel with excellent fatigue resistance, having a steel composition comprising, by mass%, C: 0.080% or less; Si: 0.70 to 3.00%; Mn: 3.00% or less; Ni: 6.00 to 10.00%; Cr: 10.00 to 17.00%; P: 0.050% or less; S: 0.008% or less; Cu: 0.50 to 2.00%; Mo: 0.50 to 3.00%; Ti: 0.15 to 0.45%; Al: 0.070% or less; Ca: 0.0020% or less; Mg: more than 0.0020% and 0.0150% or less; N: 0.015% or less; O: 0.0070% or less; with the balance being Fe and inevitable impurities,
wherein, among nonmetallic inclusions existing in a matrix phase, nonmetallic inclusions with an equivalent circle diameter of 10 um or more are not present, or even when the nonmetallic inclusions with the equivalent circle diameter of 10 um or more are present, a number density thereof is 0.100/mm² or less.

2. The precipitation-hardening type martensitic stainless steel according to claim 1,
wherein when a total mass of Al₂O₃, MgO and Ti₂O₃ obtained by analyzing an average compositional components in compounds contained in the nonmetallic inclusions with the equivalent circle diameter of 10 um or more is normalized to 100 mass%, a mass content (%) of MgO falls within a range defined by formula (1) shown below, and contents of Mg and O in the steel composition satisfy relationships of formulas (2) and (3) shown below,
[%MgO] ≥ 80% (1)
[%Mg]/[%O] ≥ 1.5 (2)
[%Mg] × [%O] ≥ 1.0 × 10⁻⁵ (3)
wherein [%MgO] shown in formula (1) represents the mass content (mass%) of MgO included in the nonmetallic inclusions with an equivalent circle diameter of 10 um or more, and [%Mg] and [%O] shown in formulas (2) and (3) respectively represent the contents (mass%) of Mg and O contained in the steel composition.

3. The precipitation-hardening type martensitic stainless steel according to claim 1 or 2, wherein the nonmetallic inclusions with the equivalent circle diameter of 10 um or more existing in the matrix phase have an equivalent circle diameter of 20 um or less.

4. The precipitation-hardening type martensitic stainless steel according to claim 1, 2, or 3, wherein when a stress at which a number of repetitions without breaking reaches 10 million times in a Schenck-type bending and torsion fatigue test is made a fatigue limit stress, the fatigue limit stress is 550 MPa or more.

5. The precipitation-hardening type martensitic stainless steel according to any one of claims 1 to 4, wherein the number density of the nonmetallic inclusions with the equivalent circle diameter of 10 um or more among the nonmetallic inclusions existing in the matrix phase is 0.050 /mm² or less.

6. The precipitation-hardening type martensitic stainless steel according to claim 5, wherein when a stress at which a number of repetitions without breaking reaches 10 million times in a Schenck-type bending and torsion fatigue test is made a fatigue limit stress, the fatigue limit stress is 600MPa or more.
